# EUROPEAN PATENT APPLICATION

(11) **EP 2 538 254 A1**
(43) Date of publication of application: **26.12.2012**
(21) Application number: 12172941.2
(22) Date of filing: 21.06.2012
(51) Int. Cl.: G02B 6/42

(54) **Optical communication component and method for manufacturing the same**

(30) Priority: 22.06.2011 JP 2011138059
(71) Applicant: Yazaki Corporation, Tokyo 108-0073 (JP)
(72) Inventor: Saito, Takahito, Shizuoka, 4101107 (JP)
(74) Representative: HOFFMANN EITLE

(57) **Abstract**

An optical communication component (1A, 1B) includes: a device package (2) on which an optical device (4) is mounted; and a lens block (10) including a lens portion (13). The lens block (10) and the device package (2) are assembled to each other in position where the optical device (4) is axially aligned with the lens portion (13). The device package (2) and the lens block (10) respectively include an alignment recess (3) and an alignment protrusion (12) which are fit to each other in the state where the lens block (10) is assembled to the device package (2). The alignment recess (3) includes an inclined surface (3b) inclined to narrow toward a bottom surface (3a). The alignment protrusion (12) includes an inclined surface (12b) inclined to narrow toward a top surface (12a). The position where the optical device (4) and the lens portion (13) are aligned with each other is set to position where the inclined surface (3b) of the alignment recess (3a) closely adheres to the inclined surface (12b) of the alignment protrusion (12) by surface contract.

## Description

### Technical Field

The present invention relates to an optical communication component performing transmission and reception of optical signals and electrical signals and a method for manufacturing the same.

### Background Art

One of such a conventional type of optical communication components is disclosed in JP 2007-155973 A (PTL 1). As illustrated in FIG. 1, a conventional optical communication component 50 includes: a device package 51; and a lens block 60 assembled to the device package 51. On the device package 51, an optical device 52 is mounted. The device package 51 is integrally provided with a peripheral wall 51a surrounding the optical device 52. The upper surface of the peripheral wall 51a is formed as a flat abutment surface 53.

The lens block 60 includes a sleeve 61 and a lens portion 62 provided at the center of lower part of the sleeve 61. Within the sleeve 61, an optical fiber (not illustrated) is connected. The bottom surface of the sleeve 61 is formed as a flat abutment surface 63.

The abutment surface 53 of the device package 51 and the abutment surface 63 of the lens block 60 are positioned with the optical device 52 axially aligned with the lens portion 62 and are fixed by a thermosetting adhesive 71, for example.

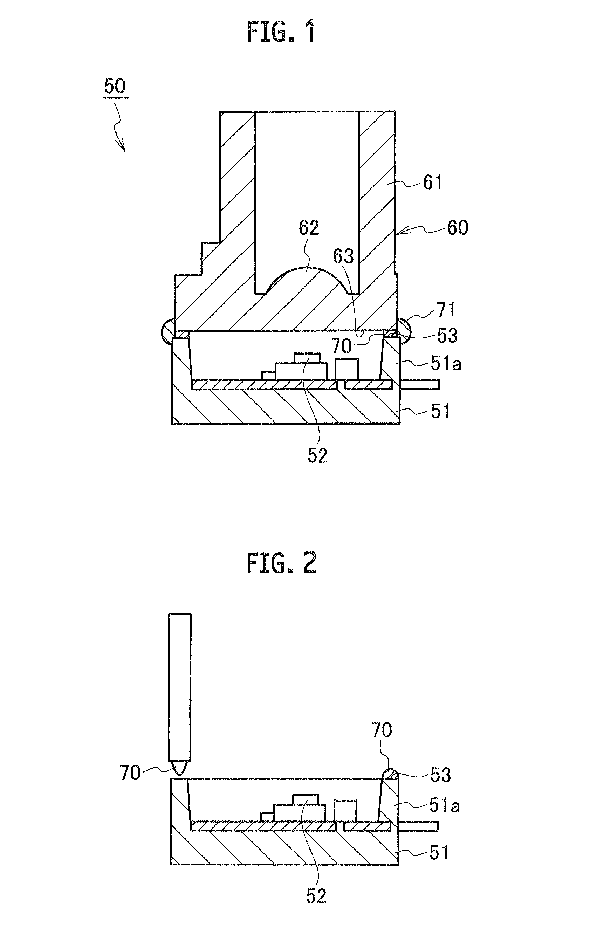

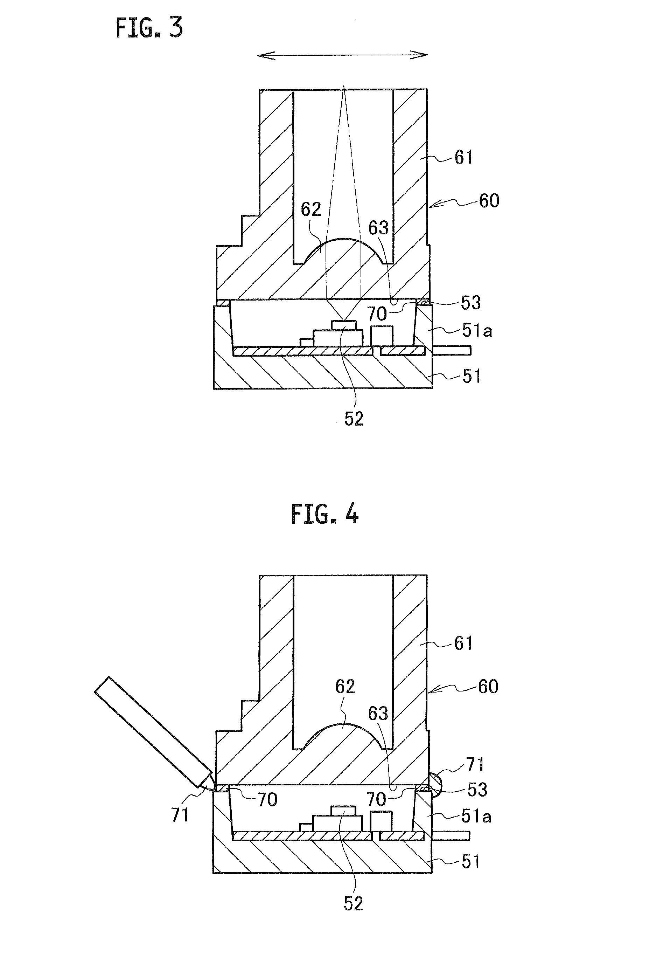

Next, a description is given of a procedure to manufacture the conventional optical communication component 50. The optical device 52 is mounted on the device package 51 in advance. First, as illustrated in FIG. 2, the UV-curable adhesive 70, for example, is applied onto the abutment surface 53 of the device package 51. Next, as indicated by arrows in FIG. 3, the abutment surface 53 of the device package 51 is caused to abut on the abutment surface 63 of the lens block 60. While the position of the lens block 60 is finely tuned relative to the device package 51, the level of an optical signal between the optical device 52 and the optical fiber (not illustrated) is checked for detection of the position where the optical device 52 and the lens portion 62 are axially aligned (an active alignment process). The applied UV-curable adhesive 70 is cured with the optical device 52 being aligned with the lens portion 62 to temporarily fix the lens block 60 to the device package 51. Next, as illustrated in FIG. 4, the lens block 60 is finally fixed to the device package 51 with the thermosetting adhesive 71, for example. The manufacturing of the optical communication component is thus completed.

### Summary of Invention

However, the conventional optical communication component 50 requires the active alignment process as an operation to axially align the optical device 52 with the lens body 62. The manufacturing operation thereof is therefore troublesome.

Moreover, the abutment surface 53 of the device package 51 and the abutment surface 63 of the lens block 60 are made flat for relative position adjustment at the active alignment process. Accordingly, after final fixing of the device package 51 to the lens block 60, the position of the device package 51 relative to the position of the lens block 60 could be shifted.

The present invention is made to solve the aforementioned problem, and an object of the present invention is to provide an optical communication component in which the optical device and the lens portion are easily axially aligned with each other and are prevented from being misaligned after final fixing and a method for manufacturing the same.

An optical communication component according to a first aspect of the present invention includes: a device package on which an optical device is mounted; and a lens block including a lens portion, in which the lens block and the device package are assembled to each other in position where the optical device is axially aligned with the lens portion. One of the device package and lens block includes an alignment recess. The other of the device package and lens block includes an alignment protrusion. In the state where the lens block is assembled to the device package, the alignment recess and the alignment protrusion are fit to each other. The alignment recess includes an inclined surface inclined to narrow toward a bottom surface of the alignment recess. The alignment protrusion includes an inclined surface inclined to narrow toward a top surface of the alignment protrusion. The position where the optical device and the lens portion are aligned with each other is set to position where the inclined surface of the alignment recess closely adheres to the inclined surface of the alignment protrusion by surface contact.

The device package may include the alignment recess, on the bottom surface of which the optical device is mounted, and the lens block may include the alignment protrusion, on the top surface of which the lens portion is provided.

The device package may include a light emitting device and a light receiving device as the optical device at a distance from each other. In this case, one of the device package and the lens block is provided with the alignment recess between the light emitting device and the light receiving device, and the other of the device package and the lens block is provided with the alignment protrusion between the light emitting device and the light receiving device.

A second aspect of the present invention is a method for manufacturing the optical communication component according to the first aspect of the present invention, the method including: a joining step of fitting the alignment recess and the alignment protrusion to each other to join the device package and the lens block; and a compression step of applying compression force to cause the inclined surface of the alignment recess and the inclined surface of the alignment protrusion to closely adhere to each other by surface contact.

Herein, the device package and the lens block may be provided with a lock portion locking the device package and lens block assembled to each other. In this case, the lock portion holds the state where the inclined surface of the alignment recess and the inclined surface of the alignment protrusion closely adhere to each other by surface contact in the compression step.

According to the aspects of the present invention, the device package and lens block are joined so that the alignment protrusion fit into the alignment recess. After the joining, the compression force is applied so that the inclined surface of the alignment protrusion and the inclined surface of the alignment recess come into contact with each other, thus setting the optical device and the lens portion to the axially aligned position. Accordingly, the process to manufacture the optical communication component does not require an active alignment process unlike the process to manufacture the conventional optical communication component and requires only the easy mechanical process such as application of a compression force to the device package and lens block. Moreover, the device package and lens block cannot be misaligned after final fixing since the alignment recess and alignment protrusion are fit and fixed to each other. Accordingly, the operation to axially align the optical device and lens portion is facilitated, and moreover the optical device and lens portion cannot be misaligned after final fixing.

### Brief Description of Drawings

FIG. 1 is a cross-sectional view of a conventional optical communication component.
FIG. 2 is a cross-sectional view illustrating a manufacturing step of the conventional optical communication component.
FIG. 3 is a cross-sectional view illustrating another manufacturing step of the conventional optical communication component.
FIG. 4 is a cross-sectional view illustrating still another manufacturing step of the conventional optical communication component.
FIG. 5A is a cross-sectional view illustrating an optical communication component according to a first embodiment with a device package and a lens block assembled with each other by a lock portion.
FIG. 5B is a cross-sectional view illustrating the optical communication component according to the first embodiment after the device package and lens block are pressed against each other.
FIGS. 6A to 6D are a plan view, a front view, a back view, and a right side view of an optical communication component according to a second embodiment.
FIG. 7 is a cross-sectional view taken along a line A-A in FIG. 6A.
FIG. 8 is a cross-sectional view taken along a line B-B in FIG. 6B.
FIG. 9 is a cross-sectional view taken along a line C-C in FIG. 6C.

### Description of Embodiments

Hereinafter, a description is given of embodiments of the present invention based on the drawings.

### (First Embodiment)

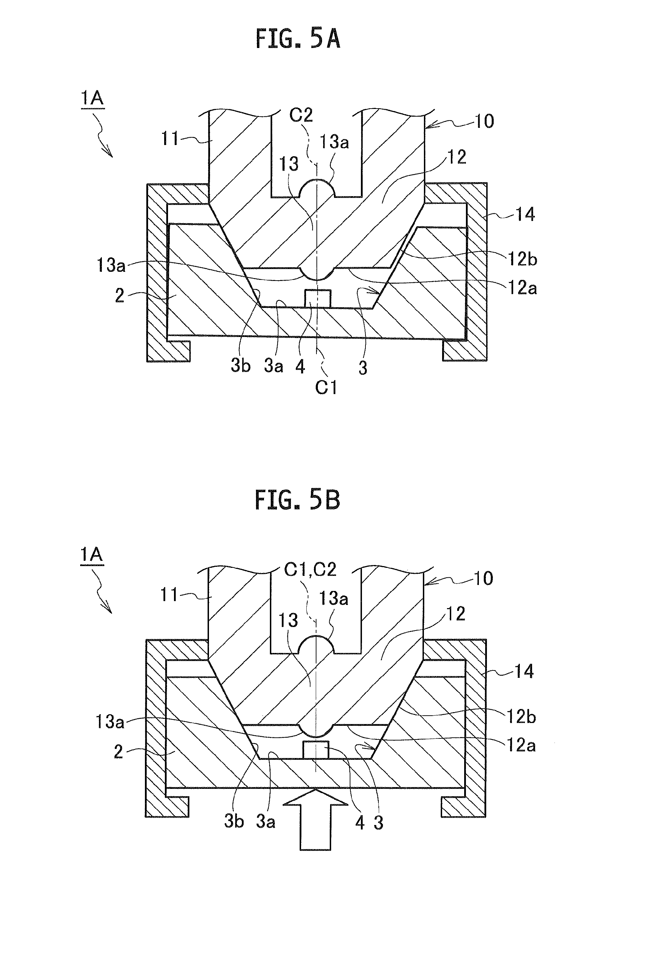

FIGS. 5A and 5B illustrate an optical communication component 1A according to a first embodiment. The optical communication component 1A is an optical communication module and includes a device package 2 and a lens block 10.

The device package 2 includes an alignment recess 3 on a side abutting the lens block 10. The alignment recess 3 has an inclined surface 3b inclined so as to narrow toward a bottom surface 3a around an axis C1 of the alignment recess 3. The alignment recess 3 is shaped in a quadrangular pyramid or a circular cone, for example. On the bottom surface 3a, an optical device 4 is mounted. The optical device 4 is a light emitting device or a light receiving device. The optical device 4 is positioned at a highly accurate position around the axis C1 of the alignment recess 3. In other words, the inclined surface 3b is positioned around the optical axis of the optical device 4.

The lens block 10 includes: a sleeve 11; an alignment protrusion 12 provided under the sleeve 11; a lens portion 13 located at the center of the alignment protrusion 12; and a cap portion 14 fixed to lower part of the sleeve 11. The sleeve 11 and the lens portion 13 are integrally made of a light transmitting material.

Within the sleeve 11, a tip of an optical fiber (not illustrated) is arranged with a ferrule (not illustrated) interposed therebetween. The alignment protrusion 12 includes an inclined surface 12b inclined so as to narrow toward a top surface 12a around an axis C2 of the alignment protrusion 12. The alignment protrusion 12 has substantially the same dimensions and profile as those of the alignment recess 3. In the first embodiment, the alignment protrusion 12 is shaped in a quadrangular pyramid or a circular cone. The lens portion 13 has an optical axis coincident with the axis C2 of the alignment protrusion 12 and has convex spherical surfaces 13a on both sides. In other words, the inclined surface 12b is positioned around the optical axis of the lens portion 13. The lens portion 13 focuses light from the optical fiber (not illustrated) to the optical device 4 or outputs light emitted from the optical device 4 to the optical fiber (not illustrated) as parallel light.

The device package 2 and lens block 10 are provided with a lock portion (not illustrated) configured to lock the device package 2 and lens block 10 which are joined to each other. The lock portion (not illustrated) can lock the device package 2 and lens block 10 which are positioned within a general positional tolerance. Accordingly, the device package 2 and lens block 10 can relatively move within the positional tolerance of the lock portion even when being locked.

As illustrated in FIG. 5B, the device package 2 is assembled to the lens block 10 by the lock portion in the position where the inclined surface 3b of the alignment recess 3 closely adhere to the inclined surface 12b of the alignment protrusion 12 by surface contact. This allows the lens portion 13 and optical device 4 to be positioned to be axially aligned with each other.

Next, a description is given of a procedure to manufacture the optical communication component 1A. In the device package 2, the optical device 4 is mounted on the axis C1 of the inclined surface 3b on the bottom surface 3a of the alignment recess 3. In the lens block 10, the lens portion 13 is provided at the center of the inclined surface 12b of the alignment protrusion 12.

First, as illustrated in FIG. 5A, the device package 2 and the lens block 10 are joined to each other so that the alignment recess 3 is fit to the alignment protrusion 12 (a joining step). The device package 2 is temporarily fixed to the lens block 10 by the lock portion. In the temporarily fixed state, normally, the inclined surface 3b of the alignment recess 3 and the inclined surface 12b of the alignment protrusion 12 do not closely adhere to each other by surface contact.

Next, the device package 2 and lens block 10 are then subjected to a compression force so that the inclined surfaces 3b and 12b of the alignment recess 3 and alignment protrusion 12 closely adhere to each other by surface contact (a compression step). Such a compression force allows the inclined surfaces 3b and 12b of the alignment recess 3 and alignment protrusion 12 to closely adhere to each other by surface contact as illustrated in FIG. 5B. In other words, at the compression step, by the inclined surfaces 3b and 12b of the alignment recess 3 and alignment protrusion 12, the axis C1 of the alignment recess 3 and the axis C2 of the alignment protrusion 12 are automatically adjusted to the same direction. In the state where the alignment recess 3 closely adhere to the alignment protrusion 12, the axis C1 of the alignment recess 3 is aligned so as to completely coincide with the axis C2 of the alignment protrusion 12. The optical device 4 of the device package 2 and the lens portion 13 of the lens block 10 are set to be axially aligned with each other. Since the lock portion allows relative movement within the positional tolerance of the lock portion, the lock portion holds the lock in the position that the optical device 4 and lens portion 13 are axially aligned with each other. The manufacturing is thus completed.

As described above, in the optical communication component 1A according to the first embodiment, the device package 2 includes the alignment recess 3, and the lens block 10 includes the alignment protrusion 12. In the assembled optical communication component 1A, the alignment recess 3 is fit to the alignment protrusion 12. The alignment recess 3 includes the inclined surface 3b inclined to narrow toward the bottom surface 3a around the axis C1 of the alignment recess 3. The alignment protrusion 12 includes the inclined surface 12b inclined so as to narrow toward the top surface 12a around the axis C2 of the alignment protrusion 12. The optical device 4 and lens portion 13 are configured to be axially aligned with each other in the position where the inclined surfaces 3b and 12b of the alignment recess 3 and alignment protrusion 12 closely adhere to each other by surface contact. Accordingly, the process to manufacture the optical communication component 1A does not require an active alignment process unlike the process to manufacture the conventional optical communication component 50 and requires only the easy mechanical process such as application of a compression force to the device package 2 and lens block 10. Moreover, the device package 2 and lens block 10 cannot be misaligned after final fixing since the alignment recess 3 and alignment protrusion 12 are fit and fixed to each other. Accordingly, the operation to axially align the optical device 4 and lens portion 13 is easy, and the optical device 4 and lens portion 13 cannot be misaligned after final fixing. For the active alignment process is unnecessary, it is possible to shorten the manufacturing time and reduce the power consumed during manufacturing, thus leading to considerable reduction in manufacturing cost.

In the conventional optical communication part 50, the axially aligned position of the optical device 52 and lens portion 62 varies from product to product. Accordingly, the method of finally fixing the device package 51 and lens block 60 to each other is restricted. On the other hand, in the optical communication component 1A according to the first embodiment, the position of the device package 2 and lens block 10 which are joined is uniquely determined by the alignment recess 3 and alignment protrusion 12. Accordingly, the method of finally fixing the device package 2 and lens block 10 to each other is not restricted. Moreover, the optical communication component 1A according to the first embodiment is provided with the lock portion used for both temporary fixing and final fixing. Accordingly, the optical communication component 1A requires only temporary fixing and not require other independent final fixing process, and the manufacturing operation thereof is facilitated. The device package 2 and lens block 10 may be finally fixed by means other than the lock portion.

The device package 2 includes the alignment recess 3. The optical device 4 is mounted on the bottom surface 3a of the alignment recess 3. The lens block 10 includes the alignment protrusion 12. The lens portion 13 is provided on the top surface 12a of the alignment protrusion 12. Accordingly, for the optical device 4 and lens portion 13, which are to be axially aligned, are placed at the centers of the alignment recess 3 and alignment protrusion 12, respectively, the axial alignment can be implemented at high accuracy.

### (Second Embodiment)

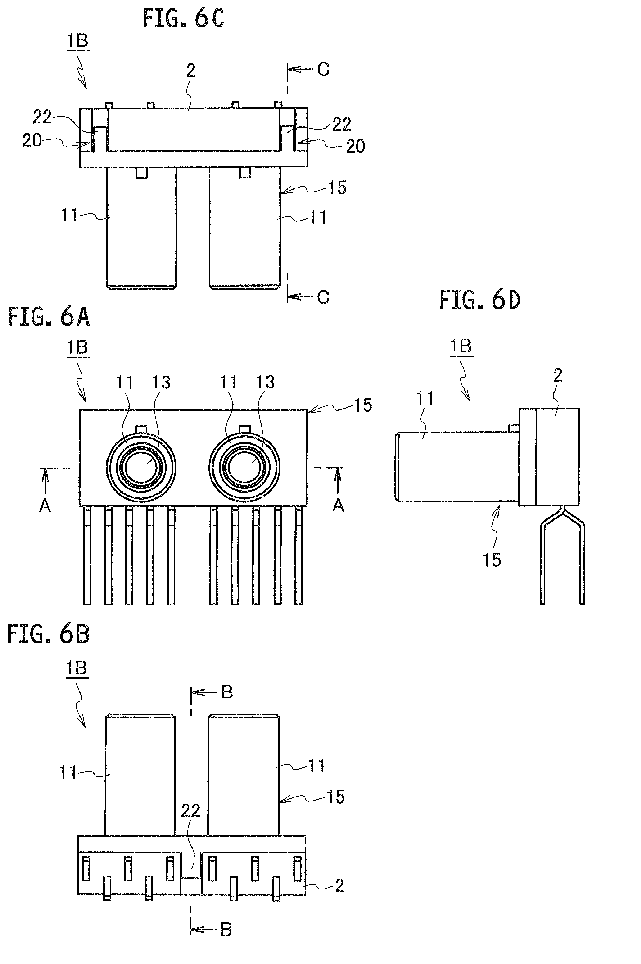

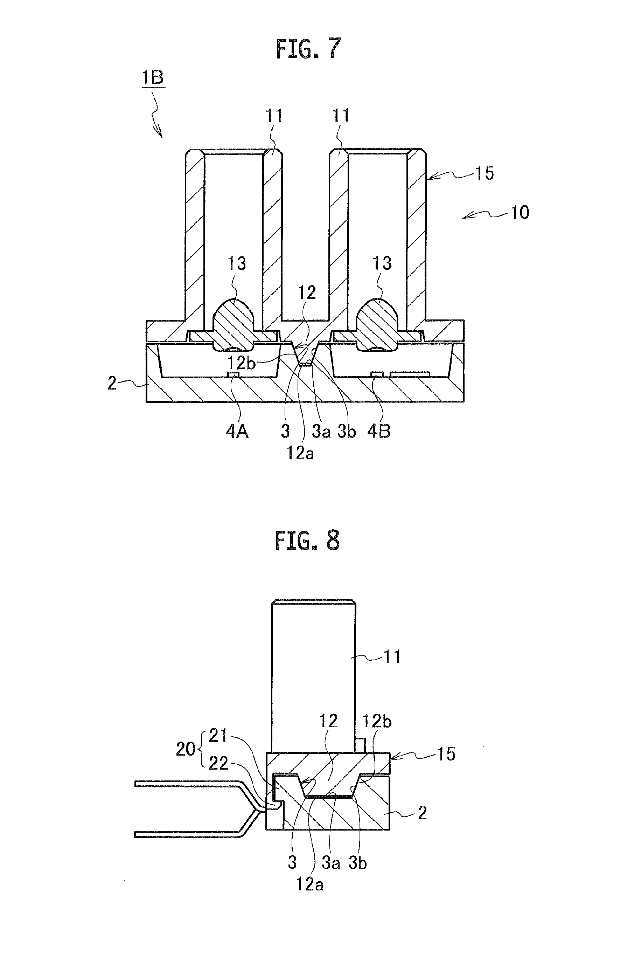

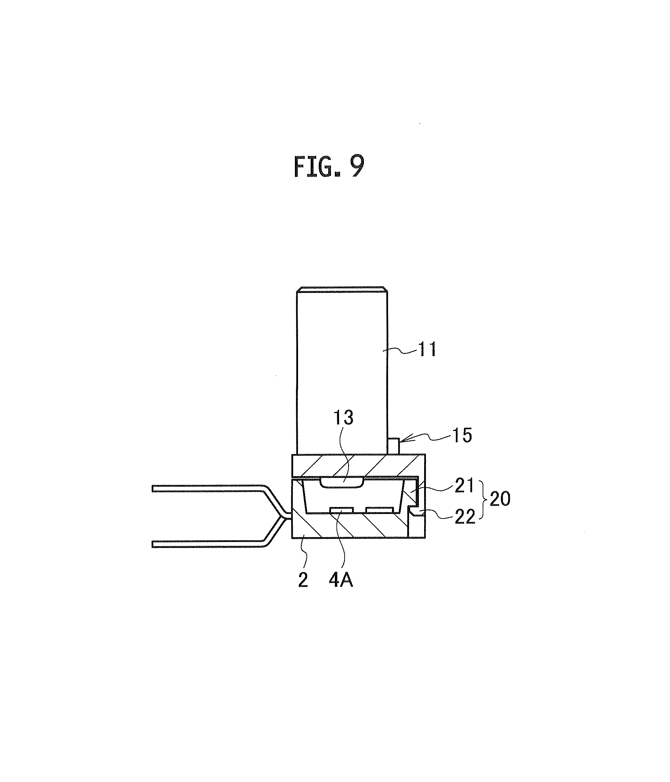

FIGS. 6A to 6D and 7 to 9 illustrate an optical communication component 1B according to a second embodiment. The optical communication component 1 B is an optical communication module and includes a device package 2 and a lens block 10.

On the device package 2, a light emitting device 4A and a light receiving device 4B which are both optical devices are mounted. The device package 2 is provided with an alignment recess 3 between the light emitting device 4A and the light receiving device 4B. The alignment recess 3 includes an inclined surface 3b inclined so as to narrow toward a bottom surface 3a. The alignment recess 3 is shaped in a quadrangular pyramid. The light emitting device 4A and light receiving device 4B are individually located at predetermined positions with respect to the alignment recess 3.

The lens block 10 includes: a sleeve unit 15 including a pair of sleeves 11; and a pair of lens portions 13 which are attached to the sleeve unit 15 and are individually placed in lower parts of the sleeves 11. Within each of the sleeves 11, a tip of an optical fiber (not illustrated) is placed with a ferule (not illustrated) interposed therebetween. The sleeve unit 15 is integrally provided with an alignment protrusion 12 between the pair of lens portions 13. The alignment protrusion 12 has an inclined surface 12b inclined so as to narrow toward a top surface 12a. The alignment protrusion 12 has substantially the same dimensions and profile as those of the alignment recess 3. In the second embodiment, the alignment protrusion 12 is shaped in a quadrangular pyramid. Each of the lens portions 13 is placed at a predetermined position with respect to the alignment protrusion 12. One of the lens portions 13 outputs light emitted from the light emitting device 4A to the optical fiber (not illustrated) as parallel light, and the other lens portion 13 focuses light from the optical fiber (not illustrated) onto the light receiving device 4B.

The device package 2 and the lens block 10 are provided with a lock portion 10 configured to lock the device package 2 and lens block 10 which are joined. The lock portion 20 includes: a lock wall 21 provided for the device package 2; and a lock arm claw 22 which is capable of being locked with the lock wall 21 and is provided for the sleeve unit 15. The lock portion 20 can lock within a general positional tolerance. Accordingly, the device package 2 and lens block 10 can be shifted relatively to each other within the positional tolerance of the lock portion 2 even when the device package 2 and lens block 10 are locked.

As illustrated in FIGS. 6A to 6D, the device package 2 and lens block 10 are assembled to each other by the lock portion 20 so that the inclined surfaces 3b and 12b of the alignment recess 3 and alignment protrusion 12 closely adhere to each other by surface contact. This allows the lens portions 13, the light emitting device 4A, and the light receiving device 4B to be axially aligned to each other, respectively.

The procedure to manufacture the optical communication component 1B is substantially the same as that of the optical communication component 1A according to the first embodiment. The description thereof is therefore omitted to avoid redundancy.

In accordance with the optical communication part 1 B according to the second embodiment, similar to the optical communication component 1A according to the first embodiment, operation to axially align the light emitting device 4A and the light receiving device 4B with the respective lens portions 13 is facilitated. Moreover, the light emitting and receiving devices 4A and 4B with the respective lens portions 13 cannot be misaligned from each other after final fixing.

In the device package 2, the light emitting device 4A and the light receiving device 4B, which are optical devices, are placed at a distance from each other. Moreover, the device package 2 and the lens block 10 respectively include the alignment recess 3 and the alignment protrusion 12 which are provided between the light emitting device 4A and the light receiving device 4B. Accordingly, the alignment recess 3 and the alignment protrusion 12 can prevent crosstalk between optical signals of the light emitting device 4A and the light receiving device 4B. The axial alignment of the two optical communication systems of the light emitting device 4A and the light receiving device 4B can be performed by a single combination of the alignment recess 3 and the alignment protrusion 12, and the structure thereof is simplified.

In the optical communication component 1B according to the second embodiment, each of the alignment recess 3 and alignment protrusion 12 are shaped in a quadrangular pyramid but may be shaped in a circular cone or the like.

### (Others)

In the first and second embodiments, the device package 2 includes the alignment recess 3 and the lens block 10 includes the alignment protrusion 12. However, the device package 2 may include the alignment protrusion 12 and the lens block 10 may include the alignment recess 3.

In the first and second embodiments, the device package 2 and lens block 10 are locked to each other by the lock portion (not illustrated) or the lock portion 20 which allows relative movement within the positional tolerance of the lock portion or lock portion 20. Accordingly, if the inclined surfaces 3b and 12b of the alignment recess 3 and alignment protrusion 12 are caused to closely adhere to each other by surface contact in the compression step, the lock portion (not illustrated) or the lock portion 20 automatically locks the alignment recess 3 and the alignment protrusion 12 which are in close contact, thus eliminating the need for other independent final fixing process. Moreover, use of the lock portion (not illustrated) or the lock portion 20 for final fixing can ensure the assembly strength of the device package 2 and lens block 10 by design.

The device package 2 and the lens block 10 can be assembled and fixed to each other by means other than the lock portion. In the absence of the lock portion, for example, the device package 2 is pressed against the lens block 10 by a jig or the like and is then finally fixed to the lens block 10 by an adhesive or joining means with application of the compression force maintained by the jig or the like.

## Claims

1. An optical communication component (1A, 1 B), comprising:
a device package (2) on which an optical device (4) is mounted; and
a lens block (10) including a lens portion (13), **characterized in that**
the lens block (10) and the device package (2) are assembled to each other in position where the optical device (4) is axially aligned with the lens portion (13),
one of the device package (2) and the lens block (10) includes an alignment recess (3),
the other of the device package (2) and the lens block (10) includes an alignment protrusion (12),
the alignment recess (3) and the alignment protrusion (12) are fit to each other with the lens block (10) assembled to the device package (2),
the alignment recess (3) includes an inclined surface (3b) inclined to narrow toward a bottom surface (3a) of the alignment recess (3),
the alignment protrusion (12) includes an inclined surface (12b) inclined to narrow toward a top surface (12a) of the alignment protrusion (12), and
the position where the optical device (4) and the lens portion (13) are aligned with each other is set to position where the inclined surface (3b) of the alignment recess (3) closely adheres to the inclined surface (12b) of the alignment protrusion (12) by surface contract.

2. The optical communication component (1A) according to claim 1, **characterized in that**
the device package (2) includes the alignment recess (3),
the optical device (4) is mounted on the bottom surface (3a) of the alignment recess (3),
the lens block (10) includes the alignment protrusion (12), and
the lens portion (13) is provided on the top surface (12a) of the alignment protrusion (12).

3. The optical communication component (1B) according to claim 1, **characterized in that**
the device package (2) includes a light emitting device (4A) and a light receiving device (4B) as the optical device (4) at a distance from each other,
one of the device package (2) and the lens block (10) is provided with the alignment recess (3) between the light emitting device (4A) and the light receiving device (4B), and
the other of the device package (2) and the lens block (10) is provided with the alignment protrusion (12) between the light emitting device (4A) and the light receiving device (4B).

4. A method for manufacturing the optical communication component (1A, 1B) according to any one of claims 1 to 3, the method comprising:
a joining step of fitting the alignment recess (3) and the alignment protrusion (12) to be fit to each other to join the device package (2) and the lens block (10); and
a compression step of applying a compression force to cause the inclined surface (3b) of the alignment recess (3) and the inclined surface (12b) of the alignment protrusion (12) to closely adhere to each other by surface contact.

5. The method according to claim 4, **characterized in that**
the device package (2) and the lens block (10) are provided with a lock portion locking the device package (2) and lens block (10) assembled to each other, and
the lock portion holds the state where the inclined surface (3b) of the alignment recess (3) and the inclined surface (12b) of the alignment protrusion (12) closely adhere to each other by surface contact in the compression step.
